# EUROPÄISCHE PATENTSCHRIFT

(11) **EP 2 436 266 B1**
(45) Veröffentlichungstag und Bekanntmachung des Hinweises auf die Patenterteilung: **04.04.2018**
(21) Anmeldenummer: 11183036.0
(22) Anmeldetag: 28.09.2011
(51) Int. Cl.: A01N 43/40, A01N 25/34, A01P 3/00, A01P 1/00

(54) **Antimikrobielles Mittel für Polymere**
Antimicrobial agent for polymers
Produit antimicrobien pour polymères

(30) Priorität: 29.09.2010 AT 16222010
(43) Veröffentlichungstag der Anmeldung: 04.04.2012
(73) Patentinhaber: KE KELIT Kunststoffwerk Gesellschaft m.b.H., 4020 Linz (AT)
(72) Erfinder: Ratschmann, Elmar, 4201 Hellmonsödt (AT)
(74) Vertreter: Patentanwaltskanzlei Hübscher

(56) Entgegenhaltungen:
- EP-A1- 0 387 489
- EP-A1- 0 945 064
- DE-A1- 3 111 739
- US-A- 4 294 963

## Beschreibung

Die Erfindung bezieht sich auf ein zumindest zwei primäre oder sekundäre Aminogruppen umfassendes 2,2,6,6-Tetramethylpiperidinderivat.

Biocide, wie Sulfonamide, Cephalosporine, Tetracycline u. dgl., greifen in für Einzeller typische Stoffwechselvorgänge ein und müssen daher im Allgemeinen kleinmolekulare Strukturen aufweisen und wasserlöslich sein. Damit sind aber die wesentlichen Voraussetzungen gegeben, dass auch auf andere Stoffwechselprozesse, die alle in einem wässrigen Milieu ablaufen, unerwünscht Einfluss genommen wird, was tunlichst zu vermeiden ist. Diese Nachteile werden durch Kontaktbiocide vermieden, die in der Regel hochmolekulare, protonierbare, chemische Verbindungen bilden, die, ohne in wässrige Lösung überzugehen oder in den inneren Stoffwechsel einzugreifen, Einzeller durch bloßen Kontakt aufgrund von statischen Ladungen und der dadurch bedingten Zelllyse abtöten. Allerdings konnten sich bekannte Kontaktbiozide, beispielsweise Polymere von basischen Methacrylaten aufgrund der systemimmanenten Estergruppen nicht durchsetzen, und zwar einerseits wegen der nicht ausreichenden Hydrolysestabilität der Estergruppen und anderseits wegen der mangelnden Verträglichkeit der Polyester mit der marktdominanten Gruppe der Polyolefine.

Um durchsichtige Kunststoffe mit einem antimikrobiellen Mittel ausrüsten zu können, ohne die Eigenschaften des Kunststoffs insbesondere hinsichtlich der Transparenz und der Wetterbeständigkeit zu beeinträchtigen, wurde bereits vorgeschlagen (EP 0 945 064 B1), als antimikrobielles Mittel 2,2,6,6-Tetramethylpiperidinderivate einzusetzen, also sterisch gehinderte Amine, wie sie als Lichtstabilisatoren für Kunststoffe im Außenbereich vielfach in Verwendung sind. Die biocide Wirkung ist allerdings vergleichsweise gering. Dazu kommt, dass trotz einer guten Hydrolysestabilität die Gefahr eines Ausschwemmens aus einem Substrat aufgrund des Molekulargewichts besteht.

Darüber hinaus offenbart die EP 0 000 769 A2 Polymerverbindungen von Polyalkylpiperidinen, die als Zusatz zu anderen Polymeren als Stabilisatoren gegen Licht und Hitze verwendet werden. Die Polyalkylpiperidine werden in einem Verhältnis von 0,01 bis 5,0 % zu einer Reihe von gängigen Polymeren, wie Polyolefinen, Polystyränen, Vinylpolymeren, Polyalkoholen oder Polyaminen, zugegeben. Die Polyalkylpiperidine können aus 2,2,6,6-Tetramethylpiperidinen und Dioxyranen gebildet werden.

Der Erfindung liegt somit die Aufgabe zugrunde, ein Kontaktbiocid zu schaffen, das die an ein solches antimikrobielles Mittel gestellten Anforderungen, insbesondere hinsichtlich der Wasserunlöslichkeit, der Stabilität und der Langzeitwirkung, vorteilhaft erfüllen kann.

Die Erfindung löst die gestellte Aufgabe durch die Verwendung eines zumindest zwei primäre oder sekundäre Aminogruppen umfassenden 2,2,6,6-Tetramethylpiperidinderivats der Formel 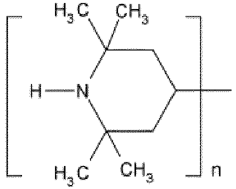 mit n ≥ 2
als antimikrobielles Mittel für Polymere, wobei das 2,2,6,6-Tetramethylpiperidinderivat mittels einer Polyoxiranverbindung mit zwei Struktureinheiten der Formel 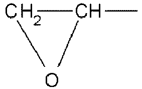 zu einer polymeren Verbindung umgesetzt ist, die die Struktureinheit 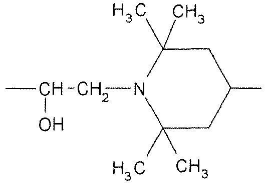 in regelmäßigen Abständen enthält.

Durch die Umsetzung der an sich als Lichtstabilisatoren für Polymere bekannten, sterisch gehinderten Amine, die mit zumindest zwei primären oder sekundären Aminogruppen versehen werden, mit difunktionellen reaktiven Molekülen zu hochmolekularen Strukturen werden vorteilhafte Voraussetzungen für Kontaktbiocide geschaffen, weil durch das hohe Molekulargewicht eine weitgehende Unlöslichkeit gesichert wird und eine vergleichsweise geringe, nur großmaschige Vernetzung vorliegt, sodass an den weitgehend linearen Molekülen die Einzeller, wie grampositive und gramnegative Bakterien, Schimmelpilze und dgl., an den kationisch wirksamen Gruppen andocken können, ohne sterisch gehindert zu werden. Durch den beim Andocken stattfindenden Ladungsaustausch mit den Lipoproteinen der Bakterienzellhülle kommt es zur Zelllyse und damit zur Zerstörung des Lebewesens. Da die chemische Struktur der erzielten Addukte stabil ist, kann die kontaktbiozide Langzeitwirkung gewährleistet werden.

Als Polyoxiranverbindungen zur erfindungsgemäßen Umsetzung mit einem 2,2,6,6-Tetramethylpiperidinderivat eigenen sich insbesondere Dioxiranverbindungen, weil eine Kettenstruktur der Moleküle bevorzugt wird, die das Andocken der Einzeller erleichtert. Dioxiranverbindungen, die vorteilhaft für diesen Zweck eingesetzt werden können, sind Bisphenol A-Diglycidylether sowie Oligomere davon, Glycol/Polyglycoldiglycidylether, Siloxandiglycidylether, Polysiloxandiepoxide, Copolymere von Ethylen, Propylen, Styrol mit Glycidylmonomeren, z. B. Vinylglycidylether mit einem Anteil der Glycidylcomonomeren von 1 bis 50 % im Copolymer, sowie Polymere von Methacrylsäureglycidylester. Die Reaktion der Grundkörper der 2,2,6,6-Tetramethylpiperidinderivate mit den Dioxiranverbindungen kann als Standardreaktion durchgeführt werden, um dann das erhaltene antimikrobielle Mittel in das Polymer einzuarbeiten, das entsprechend biozid auszurüsten ist. Es wird jedoch eine in situ Reaktion direkt im Polymer bevorzugt, wobei eine Polyaddition ohne Freisetzung von zu entfernenden Abfallprodukten abläuft. In diesem Fall werden dem Polymergranulat ein 2,2,6,6-Tetramethylpiperidinderivat sowie eine Polyoxiranverbindung entsprechend der Erfindung in geeigneter Menge, beispielsweise 0,5 bis 5 Gew.%, beigemischt, sodass die Additionsreaktion im Extruder, in der Spritzgussmaschine, im Kalander und dgl. während der für die Formung eines Werkstücks notwendigen Plastifizierung des Gemisches abläuft. Die Rezeptur kann in diesem Fall kurzfristig an besondere Anforderungen angepasst werden, weil die Reaktanten gut verfügbar, lagerfähig und gut dosierbar vorliegen. Es ist aber auch möglich, die in situ Synthese mit einer hohen Konzentration der Ausgangsprodukte, beispielsweise 20 bis 50 Gew.% durchzuführen, wobei das 2,2,6,6-Tetramethylpiperidinderivat und die Dioxiranverbindung in einer Polymermatrix verknetet und das entstehende Produkt granuliert wird, um dem biozid auszurüstenden Polymer zugemischt zu werden.

Als 2,2,6,6-Tetramethylpiperidinderivat kann vorteilhaft eine Verbindung der Formel 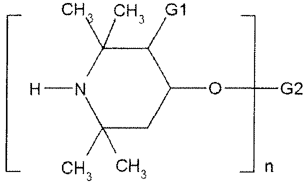 eingesetzt werden, worin n eine Zahl von 2 bis 4 ist, G1 Wasserstoff oder Methyl bedeutet und G2 für n = 2 ein gegebenenfalls durch ein oder mehrere Sauerstoffatome unterbrochenes C₁-C₁₈ Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder einer Phosphor enthaltenden Säure oder einen einwertigen Silylrest, für n = 2 ein C₂-C₁₂ Alkylen, C₄-C₁₂ Alkenylen, Xylylen, einen zweiwertigen Rest einer aliphatischen, cycloaliphatischen, araliphatischen oder aromatischen Dicarbonsäure, Dicarbaminsäure oder einer Phosphor enthaltenden Säure oder einen zweiwertigen Silylrest, für n = 3 einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest und für n = 4 einen vierwertigen Rest einer aliphatischen, cycloaliphatischen oder aromatischen Tetracarbonsäure bedeutet.

Als Silylrest wird für G2 vorzugsweise ein Rest einer aliphatischen Carbonsäure mit 2 bis 18 C-Atomen, einer cycloaliphatischen Carbonsäure mit 7 bis 15 C-Atomen, einer α, β-ungesättigten Carbonsäure mit 3 bis 5 C-Atomen oder einer aromatischen Carbonsäure mit 7 bis 15 C-Atomen eingesetzt, wobei die Carbonsäure jeweils im aliphatischen, cycloaliphatischen oder aromatischen Teil mit 1 bis 3 weiteren Gruppen substituiert sein kann.

Wird als G2 ein einwertiger Silylrest verwendet, so ergibt sich beispielsweise ein Rest nach der Formel (CⱼH₂ⱼ) - Si(Z')₂Z", worin j eine ganze Zahl zwischen 2 und 5 ist sowie Z' und Z" unabhängig voneinander C₁ bis C₄ Alkyl oder C₁ bis C₄ Alkoxy bedeuten.

Ist G2 ein zweiwertiger Rest einer Dicarbonsäure, so ergibt sich beispielsweise ein Melansäure-, Bernsteinsäure-, Glutarsäure-, Adipinsäure-, Korksäure-, Sebacinsäure-, Maleinsäure-, Itaconsäure-, Phthalsäure-, Dioctylmalonsäure-, Dibenzylmalonsäure-, Buthyl-(3,5)di-tert-buthyl.1-hydroxybenzyl)-Malonsäure- oder Bicycloheptendicarbonsäurerest.

Wird als G2 ein zweiwertiger Rest einer Dicarbaminsäure eingesetzt, so kann G2 den entsprechenden Rest einer Hexamethylendicarbaminsäure oder der 2,4-Toluylendicarbaminsäure bilden.

Stellt G2 einen dreiwertigen Rest einer Tricarbonsäure dar, so ergibt sich beispielsweise ein Trimellitsäure-, Zitronensäure- oder Nitrilotriessigsäurerest.

Bei einem vierwertigen Rest einer Tetracarbonsäure kann G2 zum Beispiel den vierwertigen Rest von Butan-1,2,3,4-tetracarbonsäure oder von Pyromellitsäure darstellen.

Besonders bevorzugt werden Verbindung, bei denen n = 2 ist und für G2 der Diacylrest einer alphatischen Dicarbonsäure mit 4 bis 12 C-Atomen eingesetzt wird. Beispiele für Polyalkylpiperidinverbindungen dieser Art sind:
1) Di(2,2,6,6-tetramethylpiperidin-4-yl)succinat
2) Di(2,2,6,6-tetramethylpiperidin-4-yl)glutarat
3) Di(2,2,6,6-tetramethylpiperidin-4-yl)adipat
4) Di(2,2,6,6-tetramethylpiperidin-4-yl)sebacat
5) Trimellitsäure-tri(2,2,6,6-tetramethylpiperidin-4-yl)ester
6) Diethylmelonsäure-di(2,2,6,6-tetramethylpiperidin-4-yl)ester
7) Di(1-cyclohexyloxy-2,2,6,6-tetramethylpiperidin-4-yl)sebacat
8) Hexan-1',6'-bis(4-carbamayloxy-1-n-butyl-2,2,6,6,-tetramethylpiperidin)
9) Dimethyl-bis(2,2,6,6-tetramethylpipedin-4-oxy)silan
10) Phenyl-tris(2,2,6,6-tetramethylpiperidin-4-oxy)silan
11) 4-Hydroxy-N-hydroxyethyl-2,2,6,6-tetramethylpiperidin
12) 4-Hydroxy-N-2-hydroxypropyl)-2,2,6,6-tetramethylpiperidin
13) 1-Glycidyl-4-hydroxy-2,2,6,6-tetramethylpipendon

Eine weitere Möglichkeit 2,2,6,6-Tetramethylpiperidinderivate vorteilhaft einzusetzen, besteht darin, als 2,2,6,6-Tetramethylpiperidinderivat eine Verbindung der Formel 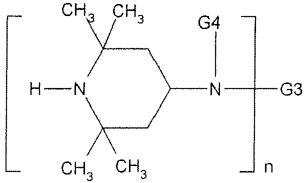 einzusetzen, worin n 2 ist, G3 ein Diamin, beispielsweise ein Alkylendiamin oder Phenylendimin, bedeutet und G4 einen Acelolylrest, beispielsweise Acetyloyl oder Benzoyl, darstellt.

Beispiele für Polyalkylpiperidinverbindungen dieser Art sind:
14) N, N'-Bis-(2,2,6,6-tetramethylpiperidin-4-yl)-hexamethylen-1,6-diamin
15) N, N'-Bis-(2,2,6,6-tetramethylpiperidin-4-yl)-hexamethylen-1,6-di-acetamid
16) Bis-(2,2,6,6-tetramethylpiperidin-4-yl)-amin
17) 4-Benzoylamino-2,2,6,6-tetramethylpiperidin
18) N,N' -Bis-(2,2,6,6-tetramethylpiperidin-4-yl)N,N'-dibutyl-adipamid
19) N,N'-Bis-(2,2,6,6-tetramethylpiperidin-4-yl)N,N'-dicyclohexyl-2-hydroxypropylen-1,3-diamin)
20) N,N'-Bis-(2,2,6,6-tetramethylpiperidin-4-yl)p-xylylen-diamin
21) N,N'-Bis-(2,2,6,6-tetramethylpiperidin-4-yl)-succindiamid
22) N-(2,2,6,6-Tetramethylpiperidin-4-yl)-β-aminodipropionsäure-di(2,2,6,6-tetramethyl-piperidin-4-yl)-ester
oder Verbindungen der Formel:
23) 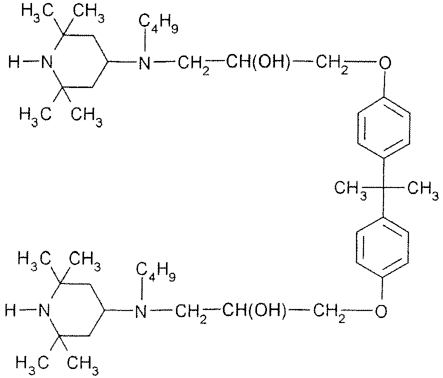
24) 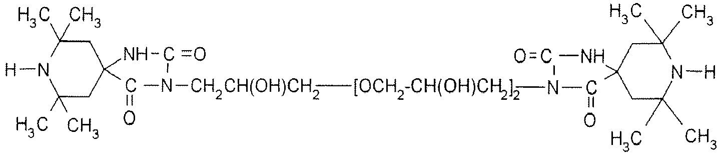
25) 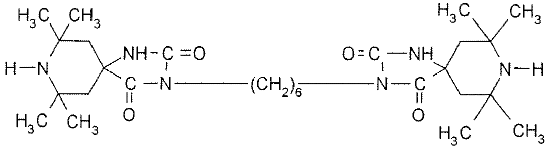
26) 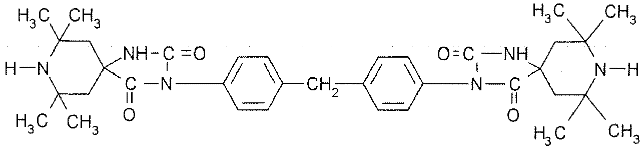
27) 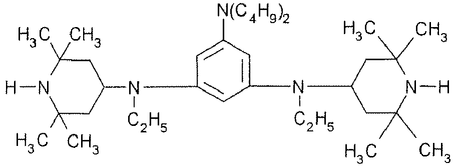
28) 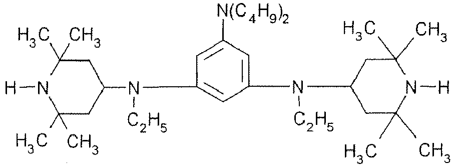
29) 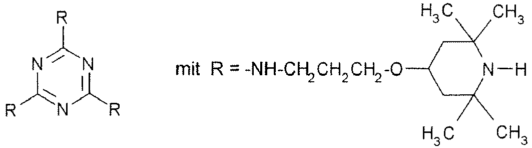
30) 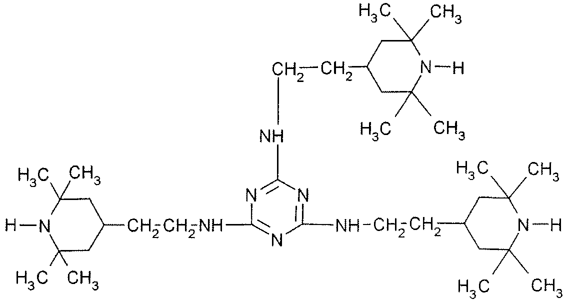
31) 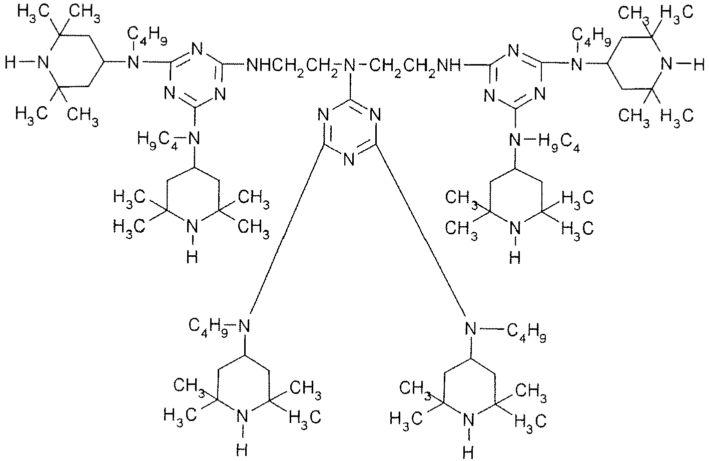
32) 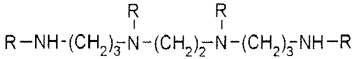 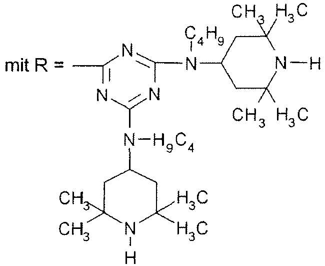
33) 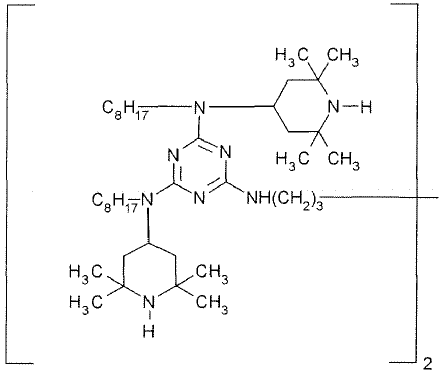
34) 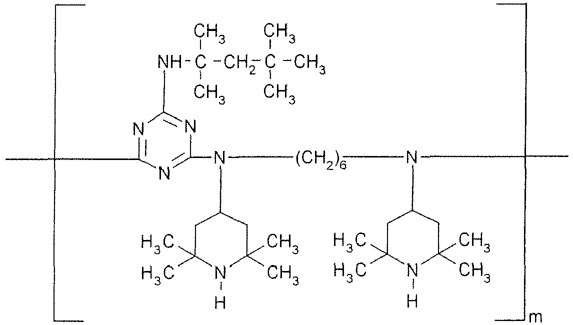
35) 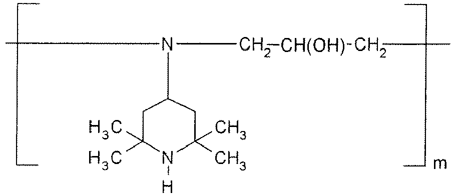
36) 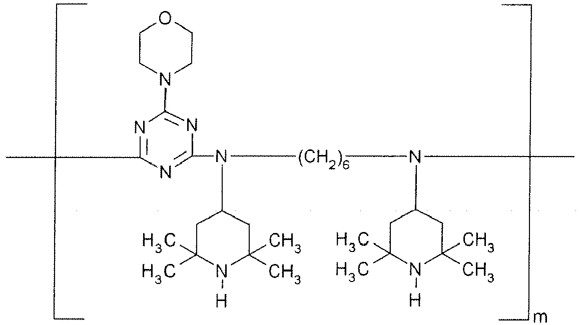
37) 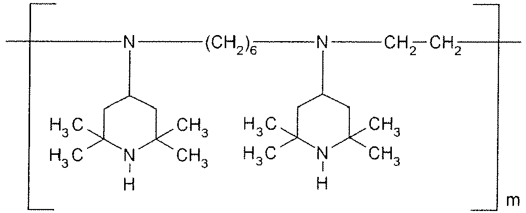
38) 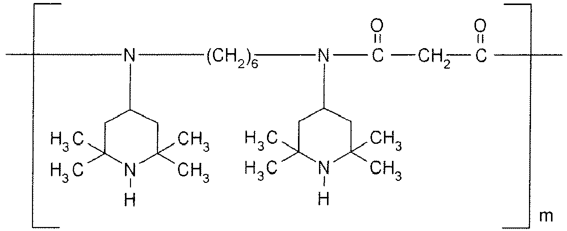
39) 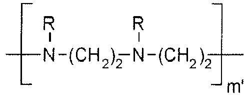 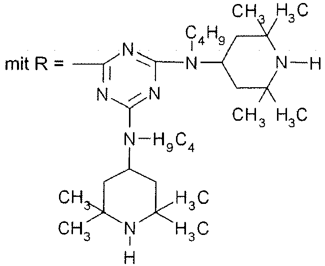
40) Weitere Beispiele für polymere Verbindungen sind Umsetzungsprodukte von Verbindungen der Formel 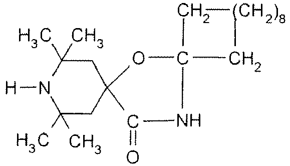 Epichlorhydrin für Polyester aus Butan-1,2,3,4-tetracarbonsäuremit einem bifunktionellen Alkohol der Formel 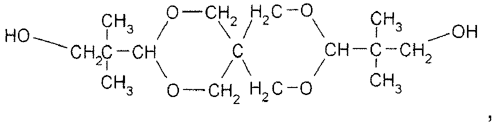 dessen von der Tetracarbonsäure stammende Carboxyl-Seitenketten mit 2,2,6,6-Tetramethyl-4-hydroxypiperidin verestert sind.
41) 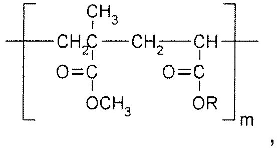 wobei R den 2,2,6,6-Tetramethylpiperidinring darstellt.
42) 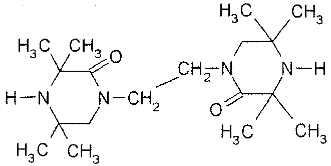
43) 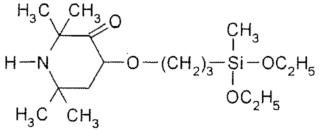
44) 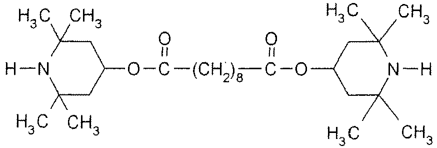
45) 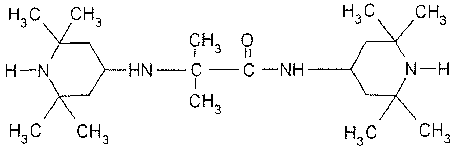
46) 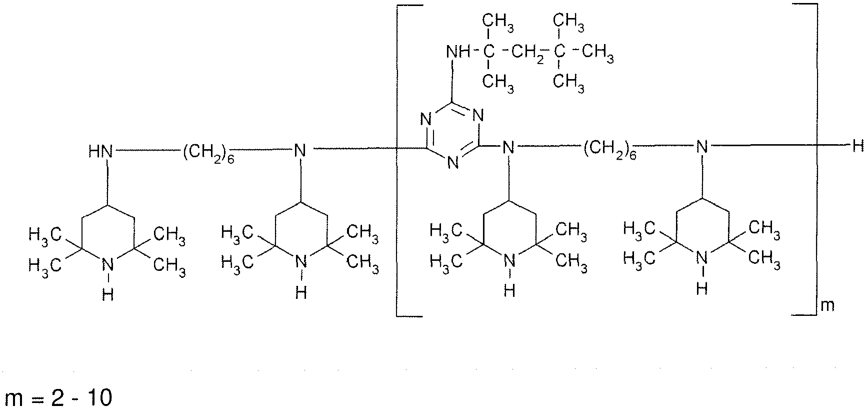
47) 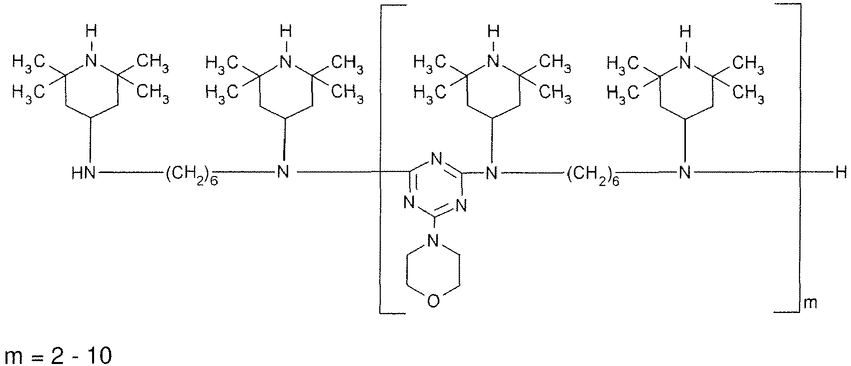
48) 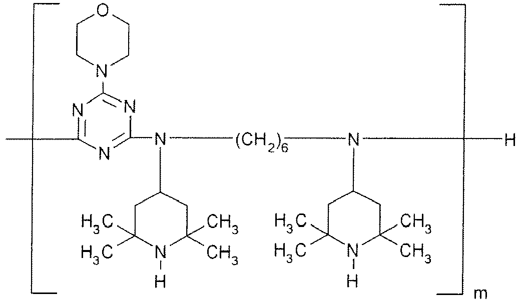
49) 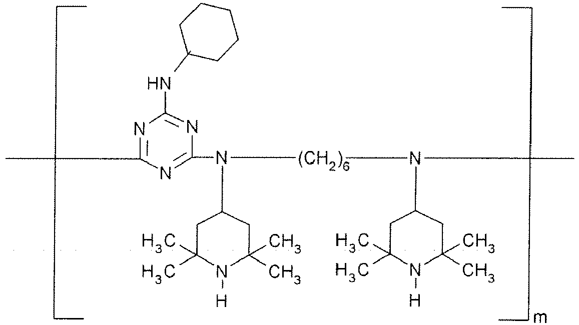
50) 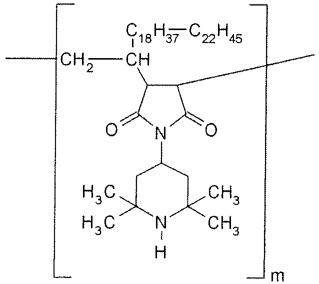
51) 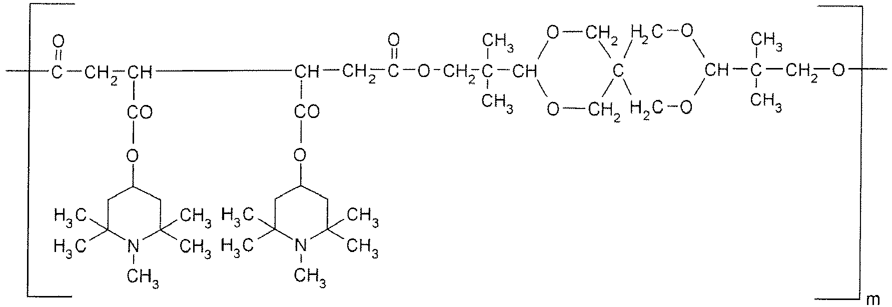
52) 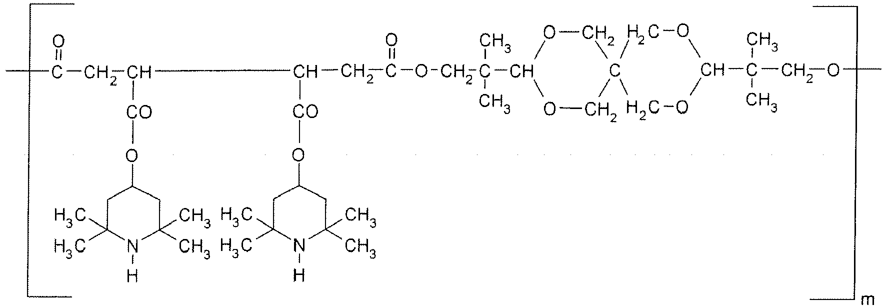
53)

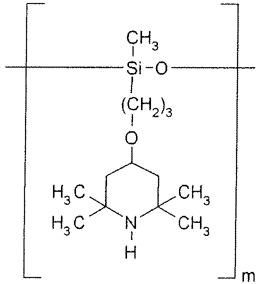

### Beispiele

### Beispiel 1

45 g (0,1 mol) N,N'-Bisformyl-N,N'-bis(2,2,6,6-tetramethyl-4-piperidinyl)hexamethylendiamin werden in 500 ml Methyl-Ethylketon gelöst und mit 22,6 g (0,1mol) Cyclohexan-1,4-dioldiglycidylether gemischt und bei Raumtemperatur 24h gerührt. Die Reaktionsmischung wird unter leichter Gelbfärbung kontinuierlich viskoser. Nach der Reaktionszeit wird die hochviskose Masse unter starkem Rühren in 500 ml Methanol eingetragen und das ausgefallene Addukt 1 fein verteilt. Nach Kühlung auf etwa 0°C wird das hellgelbe Endprodukt abgesaugt, mit Methanol gewaschen und bei max. 50°C getrocknet.
Ausbeute: 60,5 g (89 Gew.% des theoretischen Werts)
Schmelzpunkt: nicht feststellbar, Erweichung ab 85°C.

In einer Probe lassen sich keine Oxiranstrukturen (H1 nmr/FTIR) nachweisen. Es kann somit von einer Struktur des Addukts 1 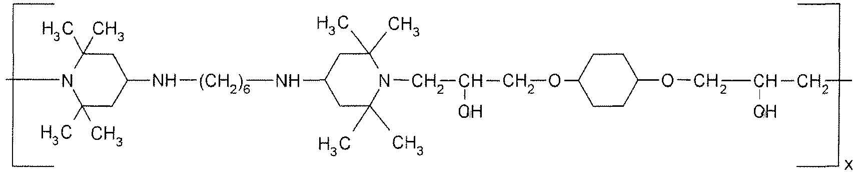 ausgegangen werden, wobei ab x ≥ 16 Zielmolekulargewichte von über 10 000 Dalton erreicht werden. Durch Verkneten von 1,5 g des Addukts l mit 135 g HDPE (Dichte 0,951 g/cm³) wird Probe 1 zum Biocidtest erhalten.

### Beispiel 2

Analog Beispiel 1 werden 250 g (0,1 mol) Poly[6-(1,1,3,3-Tetramethylbutyl)-amino-1,3,5-triazin-2,4-diyl(2,2,6,6-tetramethyl-4-piperidinyl)imino]hexamethylen(2,2,6,6-tetramethyl-4-piperidyl)imin mit 35 g (0,1 mol) Bisphenol-A-Diglyzidylether in 1 500 ml Tetrahydrofuran umgesetzt und mittels 5 000 ml H₂O ausgefällt, isoliert und getrocknet.
Ausbeute: 322 g Addukt 2

1 Gew.% des Addukts 2 werden in PP-R mit einer Dichte von 0,89 g/cm³ bei 145 °C zur Probe 2 verknetet.

### Beispiel 3

15 kg Polypropylen vom Typ PP-R (Dichte 0,89 g/cm³) werden in einem Einschneckencompounder mit 160 g (∼0,1 mol) Poly[(6-morpholino-s-triazin-2,4-diyl)(2,2,6,6-tetramethyl-4-piperidinyl)imino]hexamethylen(2,2,6,6-tetramethyl-4-piperidinyl)imin und 140 g (0,05 mol) Polydimethylsiloxan mit 2 entständigen Glyzidylgruppen vom Molgewicht 2750 bei 200° C homogen verknetet und anschließend in Kaltwasser granuliert. Die Pellets werden bei 30° C getrocknet und bilden eine lagerstabile, leicht gelblich opake Polymermasse, die ca. 2 Gew.% des Addukts 3 enthält. Aus diesem Granulat werden spritzgusstechnische Probeplatten vom Format 6 x 6 cm gespritzt und zum Biocidtest als Probe 3 verwendet.

### Beispiel 4

480 g (1 mol) Bis(2,2,6,6-tetramethyl-4-piperidyl)sebacat, 1 750 g (1 mol) difunktionalisiertes Polysiloxan gemäß Beispiel 3 und 12 000 g Polypropylen PP-B (Dichte 0,89 g/cm³, MFR:10) werden in einem Einschneckencompounder bei 180° C homogen verknetet und anschließend granuliert. Das gelblich gefärbte, opake Granulat enthält ∼ 20 Gew.% des Addukts 4. Eine Mischung von 90 Gew.% PP.R (Dichte 0,89 g/cm³, MFR:0,23) wird mit 10 Gew.% des Addukts 4 zu Rohren von 25 x 3,4 mm extrudiert. Rohrabschnitte werden als Probe 4 zum Biocidtest verwendet.

### Beispiel 5

280 g (0,1 mol) eines Polypropyl-3-oxy-4-(2,2,6,6-tetramethylpiperidyl)methyl-siloxans mit Molgewicht von ca. 2 800 und 275 g (0,1 mol) eines difunktionalisierten Polysiloxans gemäß Beispiel 3 werden in insgesamt 30 kg Polyethylen (HDPE, Dichte 0,9 g/cm³), MFR:0,55) im Zuge einer Folienextrusion eingearbeitet (220° C) und die produzierte Verpackungsfolie in einer Stärke von 25 µm und einem Adduktgehalt von 1,8 % als Probe 5 einem Biocidtest unterworfen.

### Beispiel 6

156 g (1 mol) 4-Amino-2,2,6,6-Tetramethylpiperidin und 500 g (1 mol) Di-alicyclischepoxidiertes-Polydimethylsiloxan werden auf 50 kg Polypropylengranulat in einem Trommelmischer verteilt und die frei fließenden Granulatkörner einer Rohrextrusion bei 220° C zugeführt. Die Rohre erhalten 1,3 Gew.% des Addukts 6 und werden als Probe 6 einem Biocidtest zugeführt.

### Beispiel 7

25 kg LDPE (Dichte 0,919 g/cm³) werden mit 120 g Glyzidylmethacylat-Copolymer mit einem Epoxyaquivalentgewicht von 280 und einem Molekulargewicht von 6 800 und 110 g 1,6-Hexandiamin-N,N'-bis(2,2,6,6-tetramathyl-4-piperidinyl)polymer mit 2,6-trichlor-1,3,5-triazin und nachfolgender Reaktion mit N-butyl-1-butanamin und N-Butyl-2,2,6,6-tetramethyl-4-piperidinamin in einem Trommelmischer homogenisiert und nachher in einem Einschneckenextruder zu flexiblen Schläuchen der Dimension 16 x 1 mm extrudiert. Diese Schläuche enthalten 0,9 Gew.% des Addukts 7 und werden als Probe 7 dem Biocidtest unterworfen.

Die mikrobizide Prüfung wurde gemäß JIS Z 2801:2000 mit Eschericia coli DSM 787 und Staphylococcus aneus DSM 346 unterzogen. Der Wert R der antimikrobiellen Aktivität wurde für grampositive und gramnegative Bakterien ermittelt.

Das Pilzwachstum wurde nach ISO 846 getestet und zwar sowohl nach der Methode A, die für die Bewertung der Resistenz der Probe gegenüber Pilzbefall geeignet ist, wenn keine weiteren verwertbaren organischen Materialien zugegen sind, als auch nach der Methode B, die die Situation einer Oberflächenverunreinigung der Probe in der Praxis wiederspiegelt.

Die Versuchsergebnisse sind in der nachstehenden Tabelle zusammengefasst und werden mit einer unbehandelten Probe 8 verglichen. Dabei sind in Spalte 1 die Nummern der jeweiligen Probe, in Spalte 2 der Gewichtsanteil des jeweiligen Addukts in Gew.%, in Spalte 3 der Polymertyp, in den Spalten 4 und 5 der Wert R der antimikrobiellen Aktivität für gramprositive (grampos.) und gramnegative (gramneg.) Bakterien, in der Spalte 6 die A- und B-Werte für den Pilzbefall angegeben.

| Probe Nr. | Addukt | Polymer | R-Wert | | Pilzbefall |
|---|---|---|---|---|---|
| | | | grampos. | gramneg. | |
| 1 | 1,1 | HDPE | 3,6 | 3,6 | AA00 B01 |
| 2 | 1,0 | PP-R | >4,0 | >4,0 | AA00 B01 |
| 3 | 2,0 | PP-R | 3,7 | 4,6 | AA01 B11 |
| 4 | 2,0 | PP-B | 3,8 | 4,0 | AA01 B01 |
| 5 | 1,8 | HDPE | 3,8 | 3,8 | AA01 B01 |
| 6 | 1,3 | PPH | 4,0 | >4,1 | AA00 B00 |
| 7 | 0,9 | LDPE | 3,2 | 3,0 | AA03 B04 |
| 8 | - | PP-R | 1,0 | 1,0 | A23 B34 |

## Patentansprüche

1. Verwendung eines zumindest zwei primäre oder sekundäre Aminogruppen umfassenden 2,2,6,6-Tetramethylpiperidinderivats der Formel 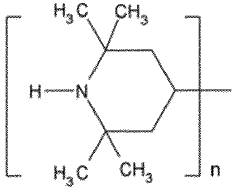 mit n ≥ 2
als antimikrobielles Mittel für Polymere, wobei das 2,2,6,6-Tetramethylpiperidinderivat mittels einer Polyoxiranverbindung mit zwei Struktureinheiten der Formel 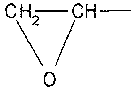 zu einer polymeren Verbindung umgesetzt ist, die die Struktureinheit 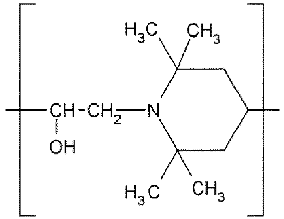 in regelmäßigen Abständen enthält.

2. Verwendung nach Anspruch 1, **dadurch gekennzeichnet, dass** als Polyoxiranverbindung eine Dioxiranverbindung eingesetzt wird.

3. Verwendung nach Anspruch 2, **dadurch gekennzeichnet, dass** als Dioxiranverbindung eine Verbindung aus der Gruppe Bisphenol-A-Diglycidylether sowie Oligomere davon, Glycol/Polyglycol-Diglycidylether, Siloxandiglycidylether, Polysiloxandiepoxide, Copolymere von Ethylen, Propylen, Styrol mit Glycidylmonomeren, z. B. Vinylglycidylether mit einem Anteil der Glycidylcomonomeren von 1 bis 50 % im Copolymer, sowie Polymere von Methacrylsäureglycidylester eingesetzt wird.

4. Verfahren zum Ausrüsten eines Polymers mit einem antimikrobiellen Mittel nach einem der Ansprüche 1 bis 3, **dadurch gekennzeichnet, dass** einem Polymergranulat das 2,2,6,6-Tetramethylpiperidinderivat mit den zumindest zwei primären oder sekundären Aminogruppen sowie die Polyoxiranverbindung zugemischt werden und dass das Gemisch in herkömmlicher Art plastifiziert und zu einem Werkstück geformt wird.

5. Verfahren nach Anspruch 4, **dadurch gekennzeichnet, dass** bezogen auf das Gesamtgewicht der Mischung 0,5 bis 5,0 Gew.% an 2,2,6,6-Tetramethylpiperidinderivat und Polyoxiranverbindung dem Polymergranulat zugemischt werden

## Claims

1. Use of a 2,2,6,6-tetramethylpiperidine derivative comprising at least two primary or secondary amino groups and corresponding to the formula 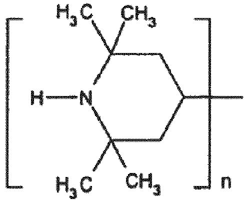 with n ≥ 2
as an antimicrobial agent for polymers, wherein the 2,2,6,6-tetramethylpiperidine derivative, by means of a polyoxirane compound with two structural units of formula 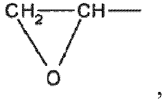 is converted into a polymeric compound containing the structural unit 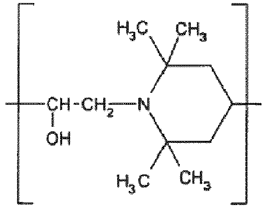 at regular intervals.

2. Use according to claim 1, **characterised in that** a dioxirane compound is used as polyoxirane compound.

3. Use according to claim 2, **characterised in that** a compound from the group bisphenol-A-diglycidylethers and oligomers thereof, glycol/polyglycol-diglycidylethers, siloxane diglycidylethers, polysiloxane diepoxides, copolymers of ethylene, propylene, styrene with glycidyl monomers, for example vinylglycidylethers with a proportion of the glycidyl comonomers of from 1 to 50% in the copolymer, and polymers of methacrylic acid glycidyl ester is used as dioxirane compound.

4. Method for equipping a polymer with an antimicrobial agent according to any one of claims 1 to 3, **characterised in that** the 2,2,6,6-tetramethylpiperidine derivative, comprising the at least two primary or secondary amino groups, and also the polyoxirane compound are admixed with a granular polymer material, and **in that** the mixture is plasticised in the conventional manner and shaped into a workpiece.

5. Method according to claim 4, **characterised in that**, based on the total weight of the mixture, 0.5 to 5.0 wt. % of 2,2,6,6-tetramethylpiperidine derivative and polyoxirane compound are admixed with the granular polymer material.

## Revendications

1. Utilisation d'un dérivé de 2,2,6,6-tétraméthylpipéridine comprenant au moins deux groupes aminés primaires ou secondaires de la formule 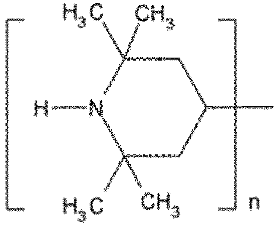 où n est supérieur ou égal à 2
comme agent antimicrobien pour des polymères, où le dérivé de 2,2,6,6-tétraméthylpipéridine est modifié par un composé polyoxirane à deux unités structurelles de la formule 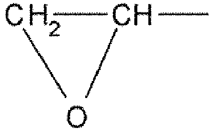 en un polymère, qui contient l'unité structurelle 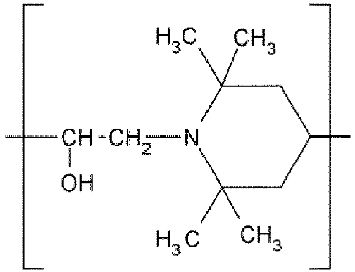 à intervalles réguliers.

2. Utilisation selon la revendication 1, **caractérisée en ce qu'**un dioxirane est utilisé en tant que composé polyoxirane.

3. Utilisation selon la revendication 2, **caractérisée en ce qu'**un composé du groupe de bisphénol A diglycidyléther et des oligomères de celui-ci, le glycol/polyglycol diglycidyléther, le siloxane diglycidyléther, le polysiloxane diépoxyde, des copolymères d'éthylène, de propylène, de styrène avec des monomères de glycidyle, par exemple, l'éther glycidylique de vinyle, avec une part de comonomères de glycidyle de 1 à 50% dans le copolymère, ainsi que des polymères de méthacrylate d'éther diglycidylique est utilisé en tant que dioxirane.

4. Procédé de finition d'un polymère avec un agent antimicrobien selon l'une quelconque des revendications 1 à 3, **caractérisé en ce que** le dérivé de 2,2,6,6-tétraméthylpipéridine avec au moins les deux groupes aminés primaires ou secondaires et le composé polyoxirane sont mélangés au granulé de polymère et **en ce que** le mélange est plastifié de manière classique et formé en une pièce.

5. Procédé selon la revendication 4, **caractérisé en ce qu'**en référence au poids total du mélange, 0,5 à 5 % en poids de dérivé de 2,2,6,6-tétraméthylpipéridine et de composé polyoxirane sont mélangés au granulé de polymère.
